(19) Europäisches Patentamt / European Patent Office / Office européen des brevets

(11) **EP 1 840 692 B1**

(12) **FASCICULE DE BREVET EUROPEEN**

(45) Date de publication et mention
de la délivrance du brevet:
**18.11.2009 Bulletin 2009/47**

(51) Int Cl.:
***G05D 1/12*** *(2006.01)*

(21) Numéro de dépôt: **07290330.5**

(22) Date de dépôt: **19.03.2007**

(54) **Procédé de pilotage et/ou guidage d'un projectile et dispositif de pilotage et/ou guidance mettant en oeuvre un tel procédé**

Verfahren zur Steuerung und/oder Lenkung eines Projektils und Vorrichtung zum Steuern und/oder Lenken mit Hilfe dieses Verfahrens

Method of piloting and/or guiding a projectile and piloting and/or guiding device implementing such a method

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **31.03.2006 FR 0602962**

(43) Date de publication de la demande:
**03.10.2007 Bulletin 2007/40**

(73) Titulaire: **NEXTER Munitions**
**78000 Versailles (FR)**

(72) Inventeur: **Bredy, Thierry**
**18230 Saint Doulchard (FR)**

(74) Mandataire: **Célanie, Christian**
**Cabinet Célanie**
**5, avenue de Saint Cloud**
**BP 214**
**78002 Versailles Cedex (FR)**

(56) Documents cités:
**EP-A1- 0 751 367       FR-A1- 2 872 928**
**US-A1- 2005 040 280     US-B1- 6 573 486**

# EP 1 840 692 B1

**Description**

Le domaine technique de l'invention est celui des procédés et dispositifs de pilotage et/ou guidage d'un projectile vers une cible.

Les projectiles connus sont guidés vers leur cible par un dispositif de guidage qui élabore les ordres de correction en accélération à appliquer au projectile pour diriger celui ci vers la cible.

Ces ordres de correction sont utilisés ensuite par un dispositif de pilotage qui élabore les commandes à appliquer à des organes de pilotage afin d'assurer la correction souhaitée.

On connaît ainsi des projectiles autonomes dotés d'un dispositif de positionnement par satellite (plus connu sous l'acronyme anglo saxon "GPS" signifiant «Global Positioning System») qui leur permet de se localiser sur trajectoire. Le projectile reçoit avant tir une programmation qui lui donne les coordonnées de la cible. Il détermine alors lui-même sa position réelle en vol, et élabore, à l'aide des informations fournies par une unité de mesure inertielle embarquée et au moyen d'algorithmes appropriés, les ordres de commande destinés aux gouvernes.

Cette unité de mesure inertielle, comprend des accéléromètres et des gyromètres (ou gyroscopes), qui fournissent (dans un repère lié au projectile) les composantes du vecteur instantané de rotation et de l'accélération non gravitationnelle à laquelle est soumis le projectile. Cette unité de mesure inertielle est mise en oeuvre à la fois pour assurer le pilotage du projectile et concourir à son guidage en fusionnant les données de cette unité avec celles fournies par le GPS.

Il est connu également de réaliser des projectiles incorporant un détecteur de cible permettant de localiser celle ci dans l'espace.

Dans ce cas les consignes de guidage et de pilotage sont élaborées à partir de la direction de localisation de la cible par rapport au projectile (ligne de visée) et également à partir des données relatives à la rotation de cette ligne de visée par rapport à un repère fixe (repère terrestre en première approximation) exprimées dans un repère lié au projectile

Les mouvements de la ligne de visée sont mesurés par rapport à un repère lié au projectile, alors qu'il est nécessaire pour guider le projectile de connaître les mouvements de la ligne de visée par rapport à un repère fixe.

La connaissance du comportement du projectile par rapport à un repère fixe est obtenue avec une unité de mesure inertielle. Il est alors possible de déterminer les mouvements de la ligne de visée par rapport à un repère fixe. Là encore, cette unité de mesure inertielle est mise en oeuvre à la fois pour assurer le pilotage du projectile et concourir à son guidage.

Il est alors possible de définir l'accélération corrective à apporter au projectile, dans un repère lié au projectile, pour rallier la cible.

Si ces solutions sont bien adaptées aux projectiles de type missiles, elles sont inutilisables pour les projectiles tirés canon en raison du manque de robustesse des gyromètres ou du coût trop élevé de ces composants de mesure.

On connaît par ailleurs par la demande FR2872928 un procédé dans lequel on utilise une mesure des composantes du champ magnétique terrestre comme référence fixe permettant d'orienter au moins partiellement le repère lié au projectile par rapport à un repère terrestre.

Concrètement, au niveau de l'algorithme décrit par cette demande, on projette le vecteur champ magnétique terrestre sur un plan de guidage défini par les vecteurs vitesse du projectile et ligne de visée puis on applique une loi de navigation proportionnelle à la variation de cet angle en fonction du temps.

Ce procédé présente comme inconvénient qu'il comporte des limitations d'emploi du fait des caractéristiques locales du champ magnétique terrestre.

Ce procédé propose en effet une approximation pseudo gyrométrique des vitesses de rotation du projectile en considérant les vitesses de rotation du vecteur champ magnétique dans les plans de tangage, lacet et roulis.

Cette approximation conduit à des incertitudes, notamment lorsque le vecteur vitesse de rotation du projectile se trouve sensiblement aligné avec le vecteur champ magnétique terrestre, auxquelles viennent s'ajouter des erreurs d'estimation dues aux bruits de mesure du champ magnétique terrestre

L'invention a pour but de remédier à de tels inconvénients en proposant un procédé de pilotage et/ou de guidage dans lequel il est possible de calculer les vitesses de rotation du projectile autour des axes de tangage, roulis et lacet tout en réduisant les limitations d'emploi liées à la géométrie du champ magnétique terrestre et en réduisant également les imprécisions liées au bruit des mesures.

Grâce à l'invention ces mesures de vitesses de rotation peuvent être directement utilisées dans les algorithmes de pilotage et/ou de guidage quel que soit l'algorithme employé.

L'invention permet donc d'éliminer complètement le besoin de gyromètres tout en maintenant une précision suffisante pour le pilotage/guidage.

L'invention a également pour objet un dispositif de pilotage et/ou de guidage qui met en oeuvre un tel procédé, dispositif qui comporte une unité de mesure gyrométrique qui est complètement dépourvue de composants gyromètres.

Il en résulte un dispositif de pilotage et/ou de guidage robuste qui est particulièrement bien adapté aux projectiles tirés par les systèmes d'armes d'artillerie.

Ainsi l'invention a pour objet un procédé de pilotage et/ou de guidage terminal d'un projectile vers une cible, procédé dans lequel on met en oeuvre un détecteur de cible permettant de localiser la cible dans un repère lié au projectile, et d'en déduire à l'aide d'algorithmes de visée les composantes d'un vecteur ligne de visée $\overrightarrow{Los}$ entre cible et projectile dans un repère lié au projectile, procédé dans lequel on détermine également les vitesses de rotation (p, q,r) du projectile autour de ses axes de roulis, de tangage et de lacet, de façon à permettre d'appliquer une loi de pilotage et/ou de guidage du projectile vers sa cible, procédé caractérisé en ce que l'on mesure également les trois composantes du champ magnétique terrestre $\overrightarrow{H}$ dans le repère lié au projectile, puis on détermine les vitesses de rotation du projectile autour de ses axes de roulis, de tangage et de lacet en combinant au niveau d'un moyen de calcul au moins deux évaluations pseudo-gyrométriques :

une première évaluation pseudo-gyrométrique d'au moins une des vitesses de rotation du projectile effectuée à partir des mesures des composantes du vecteur $\overrightarrow{Los}$ dans le repère lié au projectile et,
une deuxième évaluation pseudo-gyrométrique d'au moins une des vitesses de rotation du projectile obtenue à partir des mesures des composantes du vecteur champ magnétique $\overrightarrow{H}$ dans le repère lié au projectile.

Selon une autre caractéristique de l'invention, on mesure également au moins deux composantes d'un vecteur accélération du projectile, l'accélération dans le plan de lacet $\Gamma_Y$ et l'accélération dans le plan de tangage $\Gamma_Z$, et on mesure également les angles de braquage $(\delta r, \delta t, \delta l)$ des gouvernes de roulis $(\delta r)$, tangage $(\delta t)$ et lacet $(\delta l)$, et en ce qu'on applique tout ou partie de ces mesures ainsi que tout ou partie de celles relatives aux composantes du vecteur $\overrightarrow{Los}$ et/ou aux composantes du vecteur champ magnétique $\overrightarrow{H}$ à au moins un estimateur qui est par ailleurs alimenté par des valeurs préprogrammées de coefficients aérodynamiques et mécaniques du projectile considéré.

L'estimateur sera avantageusement un filtre de Kalman étendu.

Selon un premier mode de réalisation, la première évaluation pseudo gyrométrique pourra mettre en oeuvre une mesure des angles de site $\Theta$ et de gisement $\Psi$ du vecteur $\overrightarrow{Los}$ dans le repère projectile, la deuxième évaluation pseudo gyrométrique mettant en oeuvre une mesure des angles de site $\Theta_H$ et de gisement $\Psi_H$ du vecteur $\overrightarrow{H}$ dans le repère projectile la détermination des vitesses de rotation du projectile étant faite par une combinaison des mesures effectuées.

Selon un deuxième mode de réalisation, la première évaluation pseudo gyrométrique pourra mettre en oeuvre une mesure de l'angle de roulis $\varphi$ du vecteur $\overrightarrow{Los}$ dans le repère projectile, mesure suivie d'une estimation de la vitesse de roulis du projectile,
la deuxième évaluation pseudo gyrométrique mettra alors en oeuvre une mesure des angles de site $\Theta_H$ et de gisement $\Psi_H$ du vecteur $\overrightarrow{H}$ dans le repère projectile l'évaluation des vitesses de rotation en tangage et lacet se faisant en combinant la valeur de vitesse de roulis estimée lors de la première évaluation avec les valeurs mesurées lors de la deuxième évaluation et relatives au vecteur $\overrightarrow{H}$.

La valeur de la vitesse de roulis du projectile pourra être évaluée à l'aide d'un premier estimateur qui sera alimenté également avec la valeur de l'angle de roulis du vecteur $L_{os}$, avec la valeur de l'angle de braquage en roulis $(\delta r)$ et avec des valeurs préprogrammées de coefficients aérodynamiques et mécaniques du projectile considéré.

On évaluera ensuite les vitesses de rotation en roulis, tangage et lacet en appliquant à un deuxième estimateur les mesures relatives au vecteur $\overrightarrow{H}$, les angles de braquage $(\delta r, \delta t, \delta l)$ des gouvernes de roulis $(\delta r)$, tangage $(\delta t)$ et lacet $(\delta l)$, les mesures des composantes du vecteur accélération du projectile dans le plan de lacet $\Gamma_Y$ et dans le plan de tangage $\Gamma_Z$, le deuxième estimateur étant par ailleurs alimenté par des valeurs préprogrammées de coefficients aérodynamiques et mécaniques du projectile considéré.

L'invention a également pour objet un dispositif de pilotage et/ou de guidage terminal d'un projectile vers une cible, dispositif mettant en oeuvre le procédé selon l'invention et caractérisé en ce qu'il associe un détecteur de cible ou écartomètre, un calculateur incorporant un algorithme de pilotage et/ou de guidage du projectile, des moyens de pilotage du projectile, au moins deux accéléromètres orientés suivant les axes de mesure d'accélération en tangage (OZm) et d'accélération en lacet (OYm) du projectile et un ou plusieurs senseurs magnétiques disposés de façon à mesurer les trois composantes du vecteur champ magnétique terrestre H dans un repère lié au projectile, le calculateur incorporant ou étant associé à une unité de mesure gyrométrique qui fournit les vitesses de rotation du projectile en roulis, tangage et lacet, unité de mesure qui met en oeuvre un algorithme utilisant au moins deux évaluations pseudo-gyrométriques d'au moins une des vitesses de rotation du projectile, une évaluation étant effectuée à partir des mesures des composantes du vecteur $\overrightarrow{Los}$ dans le repère lié au projectile et une autre évaluation étant effectuée à partir des mesures des composantes du vecteur champ magnétique $\overrightarrow{H}$ dans le repère lié au projectile.

Avantageusement, l'unité de mesure gyrométrique incorporera au moins un estimateur qui sera alimenté par des valeurs préprogrammées de coefficients aérodynamiques et mécaniques du projectile considéré ainsi que par les mesures issues des accéléromètres et les mesures des angles de braquage des gouvernes données par des capteurs angulaires.

L'écartomètre pourra être de technologie semi-active laser et l'unité de mesure gyrométrique comportera au moins deux étages, un premier étage dans lequel elle estimera avec une première fréquence d'échantillonnage la vitesse de roulis du projectile à partir de la mesure des composantes du vecteur $\overrightarrow{Los}$ un deuxième étage dans lequel elle estimera, avec une deuxième fréquence d'échantillonnage, et à partir notamment des composantes du vecteur champ magnétique $\overrightarrow{H}$, les vitesses de rotation du projectile en roulis, tangage et lacet.

L'invention sera mieux comprise à la lecture de la description qui va suivre d'un mode particulier de réalisation, description faite en référence aux dessins annexés et dans lesquels :

- la figure 1a est un schéma montrant un projectile mettant en oeuvre un dispositif de pilotage et/ou guidage selon l'invention,
- la figure 1b montre schématiquement les gouvernes du projectile et le mode de calcul des angles de braquage en roulis, tangage et lacet,
- la figure 2 est un schéma montrant la mise en oeuvre d'un projectile guidé et/ou piloté avec le procédé selon l'invention, schéma permettant de visualiser certains vecteurs, angles et repères,
- la figure 3 est un schéma organique d'un dispositif de pilotage et/ou de guidage selon un premier mode de réalisation de l'invention,
- la figure 4 est un schéma organique d'un dispositif de pilotage et/ou de guidage selon un deuxième mode de réalisation de l'invention.

La figure la montre de façon schématique un mode de réalisation d'un projectile 1 mettant en oeuvre un dispositif de pilotage et/ou de guidage selon l'invention.

Le projectile 1 est équipé à sa partie arrière de quatre gouvernes de pilotage pivotantes 2. Chaque gouverne 2 est actionnée par un moyen de pilotage ou servomécanisme 3 qui est lui-même commandé par un calculateur embarqué 4. D'une façon classique, chaque gouverne est associée à un capteur 12 de la position angulaire de la gouverne 2. Ce projectile est par exemple un projectile tiré par un canon d'artillerie en direction d'une cible.

Lorsque le projectile se trouve à l'intérieur du tube d'une arme (non représentée) les gouvernes sont repliées le long du corps du projectile 1. Elles se déploient à la sortie du tube pour assurer leur fonction de pilotage. Ces mécanismes de déploiement sont classiques et il n'est pas nécessaire de les décrire ici. On pourra se reporter par exemple aux brevets FR2846079 et FR2846080 qui décrivent des mécanismes de déploiement de gouvernes de pilotage.

Le projectile 1 renferme également une tête militaire 9, par exemple une charge formée, une charge explosive ou bien une ou plusieurs sous munitions dispersables.

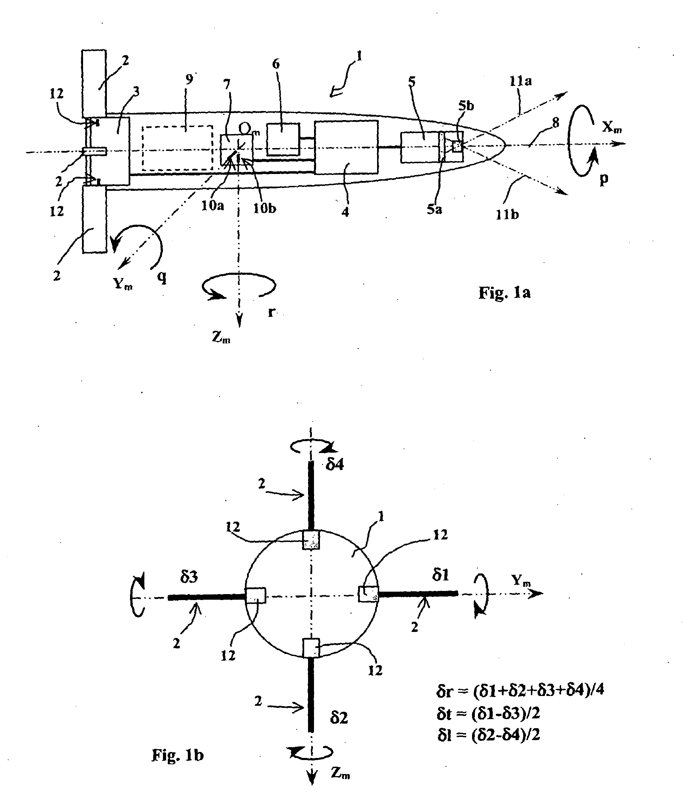

Le projectile 1 renferme aussi des moyens inertiels. Ces moyens inertiels 7 comprennent au moins deux accéléromètres 10a, 10b orientés respectivement suivant les axes de mesure de l'accélération $\Gamma_Y$ en lacet (axe $O_mY_m$) et $\Gamma_Z$ en tangage (axe $O_mZ_m$) du projectile 1. Ces axes sont, comme cela est visible sur la figure 1, des axes perpendiculaires à l'axe de roulis $O_mX_m$ (confondu avec l'axe 8 du projectile).

Les moyens inertiels sont reliés au calculateur 4 qui assure le traitement des mesures effectuées et leur exploitation ultérieure pour le pilotage et/ou le guidage du projectile.

Selon une caractéristique essentielle de l'invention, le projectile 1 incorpore également un senseur magnétique triaxial 6 (un senseur unique ou bien trois sondes magnétiques, par exemple des magnéto-résistances) réparties suivant trois directions différentes d'un trièdre de mesure, par exemple trois sondes orthogonales entre elles et dirigées chacune de préférence suivant un des axes du repère du projectile $0_mX_m$, $O_mY_m$ ou $O_mZ_m$.

Ce senseur permet de mesurer les composantes du champ magnétique terrestre H dans un repère lié au projectile 1.

Le senseur magnétique 6 est relié lui aussi au calculateur 4 qui assure le traitement des mesures et leur exploitation ultérieure.

Conformément à l'invention le projectile 1 incorpore également un détecteur de cible 5 qui est monté fixe par rapport au projectile 1.

De tels détecteurs ou écartomètres sont bien connus de l'Homme du Métier (ils sont connus sous le nom anglo saxon de "strapdown sensor"). Ils comprennent par exemple une matrice de capteurs optiques 5a sur laquelle sont envoyés les rayons lumineux provenant d'un champ d'observation qui est délimité sur la figure par les lignes 11a, 11b. Ces rayons lumineux sont fournis par une optique d'entrée 5b qui est orientée suivant l'axe 0Xm du projectile 1.

On pourra par exemple mettre en oeuvre un écartomètre semi-actif repérant une tache laser issue d'un désignateur et réfléchie sur une cible. Cet écartomètre pourra être un photo détecteur quatre quadrants (quatre zones de détection délimitées par deux droites perpendiculaires).

Un tel détecteur permet (avec un traitement des signaux approprié) de déterminer la direction de la ligne de visée reliant le projectile à une cible.

Le détecteur 5 est lui aussi relié au calculateur 4. Ce dernier assure là encore le traitement des mesures et leur exploitation ultérieure. Il incorporera des algorithmes de détection et/ou reconnaissance d'une cible donnée (pour un détecteur autonome passif ou actif) ou des algorithmes de décodage des signaux d'un désignateur (pour un détecteur semi-actif). Il incorporera aussi les algorithmes permettant, une fois une cible repérée, de calculer dans un repère lié au projectile les composantes d'un vecteur ligne de visée ($L_{OS}$).

Bien entendu la figure 1a n'est qu'un schéma explicatif qui ne préjuge pas des localisations et dimensions relatives des différents éléments. Concrètement une seule fusée de projectile pourra incorporer le calculateur 4, les senseurs magnétiques 6, les accéléromètres 7 et le détecteur de cible 5.

On a repéré également sur la figure 1a, au voisinage des axes $O_mX_m$, $O_mY_m$ et $O_mZ_m$ des flèches schématisant les sens conventionnels des rotations autour de chaque axe, ainsi que les lettres désignant habituellement les différentes vitesses de rotation du projectile par rapport au repère fixe exprimées dans le repère lié au projectile : p vitesse de rotation autour de l'axe de roulis $O_mX_m$, q vitesse de rotation autour de l'axe de tangage $O_mY_m$ et r vitesse de rotation autour de l'axe de lacet $O_mZ_m$.

La figure 1b montre schématiquement ce même projectile 1 en coupe transversale. On a repéré sur cette figure les quatre gouvernes 2 ainsi que les capteurs de positions angulaires 12. Cette figure permet de rappeler le mode de calcul des différents angles de braquage du projectile ($\delta$r angle de braquage en roulis, $\delta$t angle de braquage en tangage, $\delta$l angle de braquage en lacet) en fonction des angles de pivotement individuels de chaque gouverne tels que mesurés par les capteurs 12 ($\delta$1, $\delta$2, $\delta$3 et $\delta$4).

On aura ainsi:

$$\delta r = (\delta1+\delta2+\delta3+\delta4)/4$$

$$\delta t = (\delta1-\delta3)/2$$

et

$$\delta l = (\delta2-\delta4)/2$$

D'une façon classique, ces angles $\delta$r, $\delta$t et $\delta$l sont utilisés par les algorithmes de pilotage et de guidage.

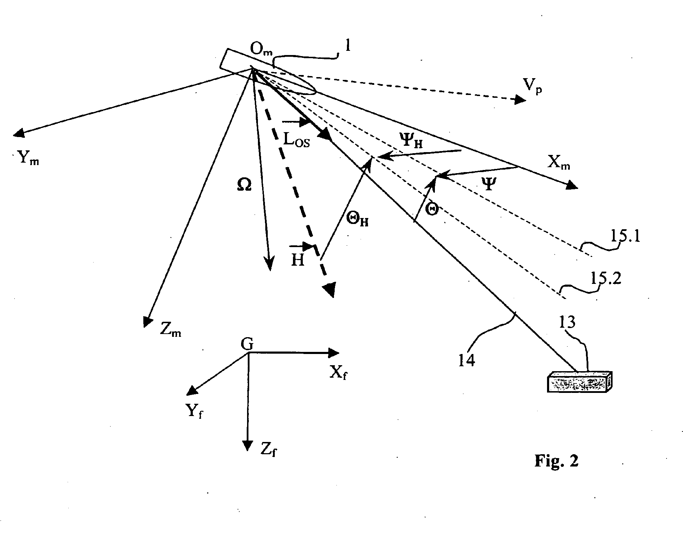

Sur la figure 2 on a représenté le projectile 1 et une cible 13.

Un repère $O_mX_mY_mZ_m$ lié au projectile a pour axes :

$0_mX_m$ (axe de rotation en roulis),
$O_mY_m$ (axe de rotation en tangage et aussi axe suivant lequel on mesure l'accélération de lacet) et
$O_mZ_m$ (axe de rotation en lacet et aussi axe suivant lequel on mesure l'accélération de tangage).

La ligne de visée 14 est une droite imaginaire reliant le centre de gravité $O_m$ du projectile et la cible 13. On notera $\overrightarrow{Los}$ le vecteur unitaire sur cette ligne de visée.

On a repéré par $\overrightarrow{\Omega}$ le vecteur rotation du projectile dans le repère lié au projectile, vecteur ayant pour composantes (p,q,r).

On a représenté aussi sur cette figure un repère terrestre fixe $GX_fY_fZ_f$.

On a représenté sur la figure 2 l'angle $\Theta$ qui est l'angle de site de la direction 14 de la ligne de visée $\overrightarrow{Los}$ et l'angle $\Psi$ qui est l'angle de gisement de la direction 14 dans le repère lié au projectile $O_mX_mY_mZ_m$.

Ces angles sont calculables aisément à partir des mesures données par l'écartomètre 5. La direction 15.1 est la projection orthogonale du vecteur Los sur le plan $O_mX_mY_m$.

On a également représenté sur la figure l'angle $\Theta_H$ qui est l'angle de site de la direction du vecteur champ magnétique H et l'angle $\Psi_H$ qui est l'angle de gisement de cette direction du vecteur champ magnétique dans le repère lié au proj ectile $O_mX_mY_mZ_m$. La direction 15.2 est la projection orthogonale du vecteur H sur le plan $O_mX_mY_m$.

Ces angles sont eux aussi calculables aisément à partir des mesures données par le capteur magnétique 6.

L'écartomètre 5 étant fixe par rapport au projectile 1, et en faisant l'hypothèse que la vitesse de rotation de la ligne de visée 14 dans le repère terrestre $GX_fY_fZ_f$ est faible par rapport à la vitesse de rotation du projectile (ce qui est généralement le cas), on peut mettre en oeuvre une évaluation pseudo-gyrométrique des vitesses de roulis, tangage et lacet (p,q,r) du projectile à partir des mesures des composantes du vecteur $\overrightarrow{Los}$.

Les évaluations dites pseudo-gyrométriques sont bien connues de l'Homme du Métier et sont habituellement mises en oeuvre dans les projectiles dotés d'autodirecteurs mobiles par rapport au projectile. Elles consistent dans ces projectiles à utiliser les mesures des angles de pivotement de l'autodirecteur pour évaluer les composantes (p,q,r) du

vecteur rotation $\vec{\Omega}$ du projectile. Cependant ces méthodes imposent une connaissance de la vitesse de rotation en roulis voire une stabilisation en roulis du projectile (p=0 ou p= constante) ce qui impose la présence d'au moins un gyromètre pour mesurer la vitesse de roulis.

Dans le cadre de la présente demande de brevet on parlera d'évaluations pseudo gyrométriques pour faire référence aux méthodes de calcul ainsi connues et qui font intervenir les localisations en site et/ou en gisement et/ou en roulis d'un vecteur donné dans un repère lié au projectile, vecteur dont l'orientation peut être considérée comme fixe ou peu variable par rapport à un repère terrestre fixe.

Suivant un premier mode de réalisation de l'invention on réalise une première évaluation pseudo-gyrométrique d'au moins une des vitesses de rotation du projectile effectuée à partir des mesures des composantes du vecteur $\overrightarrow{Los}$ dans le repère lié au projectile.

Cette première évaluation conduit à poser les équations suivantes :

$$d\Theta/dt \approx p \sin\Psi - q \cos\Psi$$

$$d\Psi/dt \approx -\tan \Theta \, . \, (p \cos\Psi + q \sin\Psi) - r$$

Equations qui pour être résolues nécessiteraient comme dans les procédés classiques de connaître la vitesse de rotation en roulis p.

Conformément à ce mode de réalisation de l'invention on procède à une deuxième évaluation pseudo-gyrométrique d'au moins une des vitesses de rotation du projectile, évaluation qui sera faite à partir des mesures des composantes du vecteur champ magnétique $\vec{H}$ dans le repère lié au projectile.

Le champ magnétique étant fixe par rapport au repère terrestre, il est possible d'utiliser les mesures de ce champ d'une façon similaire à celle qui a été faite des composantes du vecteur $\overrightarrow{Los}$.

Cette deuxième évaluation conduit à poser les équations suivantes :

$$d\Theta_H/dt = p \sin\Psi_H - q \cos\Psi_H$$

$$d\Psi_H/dt = -\tan \Theta_H \, . \, (p \cos\Psi_H + q \sin\Psi_H) - r$$

Il n'y a pas ici d'approximation. En effet $\vec{H}$ est fixe par rapport au repère terrestre, ce qui n'est pas le cas de $\overrightarrow{Los}$.

Ces équations ne peuvent pas non plus être résolues seules sans connaître la vitesse de roulis p.

Conformément à l'invention on combine les deux évaluations pseudo gyrométriques précédentes, ce qui conduit à résoudre les quatre équations :

$$\dot{\Theta} = d\Theta/dt = p \sin\Psi - q \cos\Psi$$

$$\dot{\Psi} = d\Psi/dt = -\tan \Theta \, . \, (p \cos\Psi + q \sin\Psi) - r$$

$$\dot{\Theta}_H = d\Theta_H/dt = p \sin\Psi_H - q \cos\Psi_H$$

$$\dot{\Psi}_H = d\Psi_H/dt = -\tan \Theta_H \, . \, (p \cos\Psi_H + q \sin\Psi_H) - r$$

Ce qui peut s'écrire sous la forme d'un produit matriciel:

$$|A| \times \begin{vmatrix} p \\ q \\ r \end{vmatrix} = \begin{vmatrix} \dot{\Theta}_H \\ \dot{\Psi}_H \\ \Theta \\ \Psi \end{vmatrix}$$

que l'on pourra noter A.Ω = B

Il est aisé de résoudre ce système surdéterminé selon des méthodes classiques

La combinaison des deux mesures pseudo-gyrométriques permet donc d'obtenir les composantes du vecteur $\vec{\Omega}$ sans qu'il soit nécessaire de mettre en oeuvre un gyromètre en tant que composant.

Par ailleurs les deux mesures pseudo gyrométriques complémentaires permettent de réduire les limitations d'emploi liées aux orientations du champ magnétique par rapport au projectile. En effet, la probabilité d'avoir une colinéarité simultanée de la ligne de visée 14, du champ magnétique terrestre H et du vecteur rotation $\vec{\Omega}$ est très réduite.

Il est cependant utile de réduire le bruit lié à la mesure du champ magnétique.

Pour cela conformément à l'invention on mettra en oeuvre au moins un moyen estimateur, tel qu'un filtre de Kalman étendu, moyen qui sera par ailleurs alimenté par des valeurs préprogrammées de coefficients aérodynamiques et des caractéristiques mécaniques du projectile considéré.

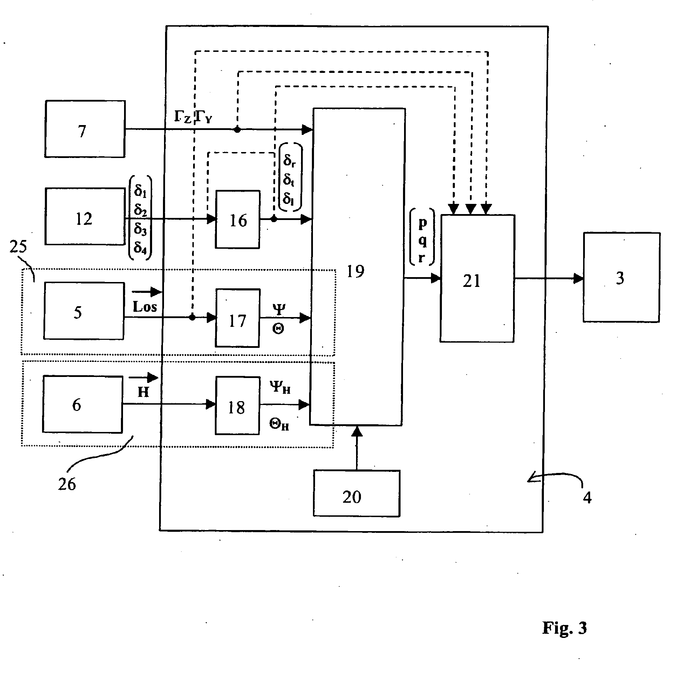

La figure 3 montre une architecture schématique d'un dispositif mettant en oeuvre l'invention.

Ce dispositif associe le calculateur 4 au détecteur de cible 5, aux accéléromètres 7, et aux senseurs magnétiques 6.

Par ailleurs le calculateur 4 est alimenté par les signaux fournis par les quatre capteurs 12 de la position angulaire des gouvernes.

Le calculateur comporte différents modules logiciels.

Un premier module 16 réalise le calcul des angles de braquage (δr,δt,δl) des gouvernes 2 en roulis (δr), en tangage (δt) et en lacet (δl). Ce calcul est effectué à partir des valeurs δ1,δ2,δ3 et δ4 fournies par les capteurs 12. Les formules de calcul des angles δr,δt,δl ont été précisées précédemment.

Un deuxième module logiciel 17 calcule, à partir des signaux fournis par l'écartomètre 5, les angles de site Θ et de gisement Ψ du vecteur $\vec{Los}$ dans le repère projectile.

Un troisième module 18 calcule à partir des signaux fournis par les senseurs magnétiques 6, les angles de site $\Theta_H$ et de gisement $\Psi_H$ du vecteur $\vec{H}$ dans le repère projectile.

Conformément à ce mode de réalisation de l'invention, le calculateur 4 comporte également un module logiciel 19 qui est un estimateur, par exemple un filtre de Kalman étendu.

Cet estimateur est par ailleurs alimenté par des valeurs de coefficients aérodynamiques et mécaniques du projectile 1 considéré. Ces valeurs sont incorporées dans une mémoire 20.

Les coefficients aérodynamiques et mécaniques interviennent dans la fonction de transfert du projectile. Ils caractérisent le comportement dynamique du projectile vis à vis des diverses sollicitations auxquelles il peut être soumis. Pour définir cette fonction de transfert, il suffit de connaître les caractéristiques aérodynamiques du projectile (sous forme de coefficients et/ou de tableaux de valeurs) et ses caractéristiques mécaniques (masse, centre de gravité, matrice d'inertie).

L'estimateur 19 permet de prendre en compte les caractéristiques dynamiques du projectile ce qui permet d'améliorer l'estimation des vitesses de rotation p,q et r et d'éliminer une grande partie du bruit de mesure.

L'estimateur repose également sur l'observation (c'est à dire la mesure) des données suivantes:

- les accélérations $\Gamma_Y$ et $\Gamma_Z$ mesurées suivant les axes de mesure respectivement en lacet et en tangage,
- les angles Ψ, Θ définissant la direction de la ligne de visée $L_{os}$ dans le repère lié au projectile,
- les angles $\Psi_H$, $\Theta_H$ définissant la direction du champ magnétique terrestre H dans le repère lié au projectile.

Les filtres de Kalman sont bien connus de l'Homme du Métier notamment dans le domaine des asservissements et du traitement du signal. Il n'est donc pas nécessaire de décrire précisément les algorithmes de filtrage mis en oeuvre.

Le filtre 19 permet donc d'estimer les composantes (p,q,r) du vecteur rotation du projectile ($\vec{\Omega}$) définies dans le repère lié au projectile.

Ce filtre met en oeuvre neuf variables d'état :

- les composantes p,q,r précitées,
- les angles Ψ,Θ définissant la direction de la ligne de visée $L_{OS}$ dans le repère lié au projectile
- les angles $\Psi_H$, $\Theta_H$ définissant la direction du champ magnétique terrestre H dans le repère lié au projectile,
- les angles α (incidence du projectile en tangage) et β (incidence du projectile en lacet).

Les valeurs estimées des composantes (p,q,r) du vecteur rotation du projectile sont ensuite utilisées d'une façon classique par un algorithme 21 de pilotage et/ou de guidage qui assure la commande du moyen de pilotage 3 des gouvernes.

L'algorithme de pilotage et/ou de guidage 21 utilisera par ailleurs d'une façon classique les mesures des angles de braquage $\delta r, \delta t, \delta l$ des gouvernes (ou bien directement les angles mesurés $\delta 1, \delta 2, \delta 3, \delta 4$), les mesures des accélérations $\Gamma_Y$ et $\Gamma_Z$ ainsi que celle des composantes du vecteur $\overrightarrow{Los}$

L'estimateur 19 est donc relié (traits interrompus sur la figure) au module 16 (ou directement aux capteurs 12) ainsi qu'aux accéléromètres 7 et au détecteur de cible 5.

L'estimateur 19 constitue ainsi une unité de mesure gyrométrique totalement logicielle et dépourvue de composants gyromètres fragiles et résistant mal aux accélérations de tir du projectile.

On a ainsi schématisé sur la figure 3 par le cadre 25 les moyens constituant le premier évaluateur pseudo gyrométrique et par le cadre 26 les moyens formant le deuxième évaluateur pseudo gyrométrique.

A titre d'exemple on mettra en oeuvre dans le calculateur des algorithmes utilisant les équations suivantes :

Concernant la première évaluation pseudo gyrométrique (à partir du vecteur $\overrightarrow{Los}$) :

$$\dot{\Theta} = d\Theta/dt = p\ \sin\Psi - q\ \cos\Psi$$

$$\dot{\Psi} = d\Psi/dt = -\tan\Theta\ .\ (p\ \cos\Psi + q\ \sin\Psi) - r$$

Ces équations expriment la dérivée des deux variables d'état ($\Psi$, $\Theta$) en fonction des composantes du vecteur d'état.

Il est à noter que ces équations ne sont pas linéaires ce qui nécessite de faire appel à un filtre de Kalman étendu (extension du filtrage de Kalman qui est en principe conçu pour traiter des systèmes linéaires)

Concernant la deuxième évaluation pseudo gyrométrique (à partir du vecteur $\overrightarrow{H}$) on écrira les équations :

$$\dot{\Theta}_H = d\Theta_H/dt = p\ \sin\Psi_H - q\ \cos\Psi_H$$

$$\dot{\Psi}_H = d\Psi_H/dt = -\tan\Theta_H\ .\ (p\ \cos\Psi_H + q\ \sin\Psi_H) - r$$

Tout comme les précédentes, ces deux équations expriment la dérivée des deux variables d'état ($\Psi_H$, $\Theta_H$) en fonction des composantes du vecteur d'état. Ces équations ne sont pas non plus linéaires.

L'estimateur mettra en oeuvre également des équations liées au comportement mécanique et aérodynamique du projectile dans les plans de tangage, lacet et selon l'axe roulis. Ces équations sont classiques on pourra ainsi écrire :

**Relations dans le plan de tangage exprimées dans le repère lié au projectile :**

$$\dot{\alpha} = d\alpha/dt = p\ \beta + A_\alpha\ \alpha + q + B_\delta\ \delta_T$$

$$\dot{q} = dq/dt = B_\alpha\ \alpha + C_q\ q + J\ r\ p + D_\delta\ \delta_T$$

et

$$\Gamma_Z = P_\alpha\ \alpha + P_\delta\ \delta_T$$

Equations dans lesquelles $\alpha$ est l'incidence du projectile en tangage, $\beta$ est l'incidence du projectile en lacet, p est la vitesse de rotation en roulis, q est la vitesse de rotation en tangage, r est la vitesse de rotation en lacet, $\delta_T$ est l'angle de braquage en tangage et $\Gamma_Z$ est l'accélération dans le plan de tangage telle que mesurée par l'accéléromètre de tangage.

**Relations dans le plan de lacet exprimées dans le repère lié au projectile :**

$$\dot{\beta} = d\bar{\bar{\beta}}/dt = -p \; \alpha + A_\alpha \; \beta + r + B_\delta \; \delta_L$$

$$\dot{r} = dr/dt = B_\alpha \; \beta + C_q \; r - J \; p \; q + D_\delta \; \delta_L \quad et$$

$$\Gamma_Y = -P_\alpha \; \beta - P_\delta \; \delta_L$$

Equations dans lesquelles : $\alpha$ est l'incidence du projectile en tangage, $\beta$ est l'incidence du projectile en lacet, p est la vitesse de rotation en roulis, q est la vitesse de rotation en tangage, r est la vitesse de rotation en lacet, $\delta_L$ est l'angle de braquage en lacet et $\Gamma_Y$ est l'accélération dans le plan de lacet telle que mesurée par l'accéléromètre de lacet.

Dans les deux groupes d'équations précédents les paramètres $A_\alpha$, $B_\delta$, $B_\alpha$, $C_q$, J, $D_\delta$, $P_\alpha$ et $P_\delta$ sont des coefficients classiques bien connus de l'Homme du Métier et définis à partir des caractéristiques du projectile : caractéristiques mécaniques (masse, position du centre de gravité, matrice d'inertie) et caractéristiques aérodynamiques.

Ces différents paramètres sont incorporés dans la mémoire 20 du calculateur 4 (sous forme de coefficients ou de tables de données).

Une programmation du profil de vol avant le tir de projectile pourra permettre de sélectionner les valeurs adéquates. Ceci peut être réalisé en initialisant au départ du coup une base de temps embarquée dans le projectile (le profil de vol préprogrammé indiquant les caractéristiques du vol à chaque instant et les paramètres ou coefficients à adopter pour les calculs).

Dans l'exemple qui est ici choisi, on a considéré que les caractéristiques en tangage et lacet du projectile sont identiques, ce qui est le cas le plus généralement rencontré.

Concernant le roulis du projectile on pourra enfin écrire la relation suivante :

$$\dot{p} = dp/dt = (-1/T)p + (K_r/T)\delta_R$$

Relation dans laquelle p est la vitesse de rotation en roulis, $\delta_R$ est l'angle de braquage des gouvernes en roulis et T et $K_r$ sont des coefficients liés aux caractéristiques mécaniques et aérodynamiques du projectile.

L'ensemble des équations ainsi décrites constitue un système qui peut s'exprimer sous la forme de l'équation d'état suivante :

$$\begin{vmatrix} \dot{\psi} \\ \dot{\theta} \\ \dot{\psi}_H \\ \dot{\theta}_H \\ \dot{\alpha} \\ \dot{\beta} \\ \dot{p} \\ \dot{q} \\ \dot{r} \end{vmatrix} = \begin{vmatrix} -\tan\Theta*(p\cos\Psi+q\sin\Psi)-r \\ +p\sin\Psi-q\cos\Psi \\ -\tan\Theta_H*(p\cos\Psi_H+q\sin\Psi_H)-r \\ +p\sin\Psi_H-q\cos\Psi_H \\ p\times\beta+A_\alpha\times\alpha+q \\ -p\times\alpha+A_\alpha\times\beta+r \\ (-1/T)\times p \\ B_\alpha\times\alpha+C_q\times q+J\times r\times p \\ B_\alpha\times\beta+C_q\times r-J\times p\times q \end{vmatrix} + \begin{vmatrix} 0 & 0 & 0 \\ 0 & 0 & 0 \\ 0 & 0 & 0 \\ 0 & 0 & 0 \\ 0 & B_\delta & 0 \\ 0 & 0 & B_\delta \\ (Kr/T) & 0 & 0 \\ 0 & D_\delta & 0 \\ 0 & 0 & D_\delta \end{vmatrix} \times \begin{vmatrix} \delta_r \\ \delta_t \\ \delta_l \end{vmatrix}$$

De la même façon, on peut exprimer l'expression du vecteur de mesure sous la forme suivante :

$$\begin{vmatrix} \psi \\ \theta \\ \psi_H \\ \theta_H \\ \Gamma_z \\ \Gamma_y \end{vmatrix} = \begin{vmatrix} 1 & 0 & 0 & 0 & 0 & 0 & 0 & 0 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & P_\alpha & 0 & 0 & 0 & 0 \\ 0 & 0 & 0 & 0 & 0 & -P_\alpha & 0 & 0 & 0 \end{vmatrix} \times \begin{vmatrix} \psi \\ \theta \\ \psi_H \\ \theta_H \\ \alpha \\ \beta \\ p \\ q \\ r \end{vmatrix}$$

Ces équations permettent la mise en oeuvre d'un filtre de Kalman étendu qui conduit notamment à leur résolution et à la détermination des composantes p, q et r du vecteur $\Omega$

Le premier mode de réalisation de l'invention qui a été décrit propose d'introduire au niveau d'un seul estimateur les différents paramètres et les différentes mesures.

Lorsque l'on met en oeuvre un projectile qui est doté d'un écartomètre 5 semi-actif laser la fréquence de répétition de l'illumination laser peut être relativement faible alors que la fréquence de répétition des mesures magnétiques et accélérométriques peut être beaucoup plus élevée.

Il n'est donc pas alors possible de traiter simultanément dans un seul et même estimateur l'ensemble des mesures, la fréquence d'échantillonnage doit en effet être calquée sur la valeur la plus faible, ce qui conduit à des lenteurs au niveau de l'estimation des composantes (p,q,r) du vecteur rotation du projectile ($\overrightarrow{\Omega}$) et interdit leur utilisation pour le pilotage et/ou le guidage.

Selon un deuxième mode de réalisation de l'invention on procèdera dans ce cas à deux évaluations pseudo-gyrométriques des vitesses de rotation du projectile, l'une à partir des mesures des composantes du vecteur $\overrightarrow{Los}$ et l'autre à partir des mesures des composantes du vecteur champ magnétique $\overrightarrow{H}$ dans le repère lié au projectile.

Cependant pour la première évaluation pseudo-gyrométrique (celle faite à partir des composantes du vecteur $\overrightarrow{Los}$ on n'évaluera pas toutes les composantes du vecteur vitesse mais uniquement la vitesse de rotation en roulis p.

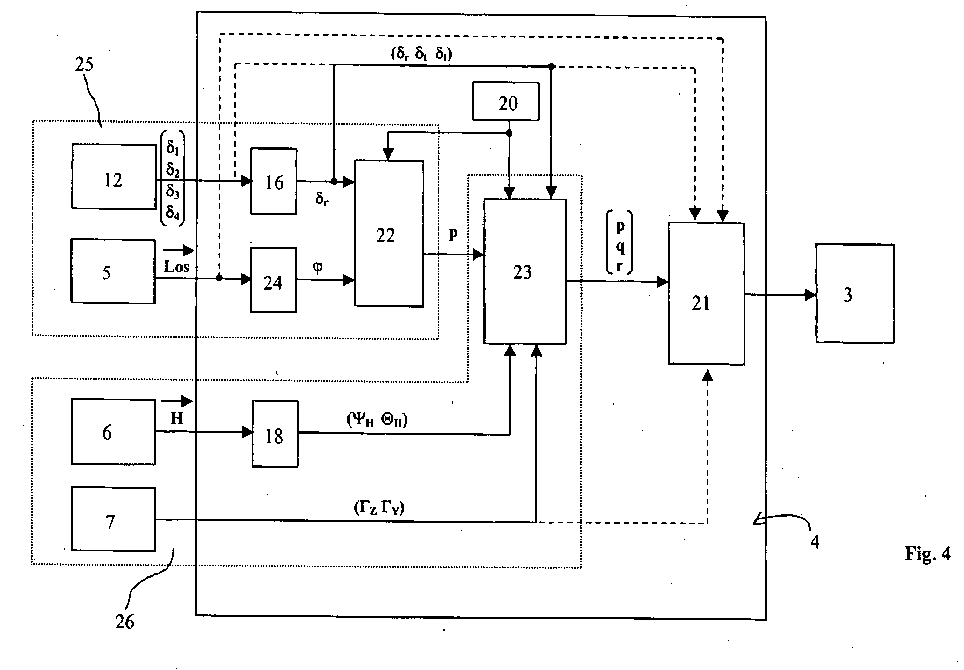

La figure 4 montre une architecture schématique d'un dispositif mettant en oeuvre ce deuxième mode de réalisation de l'invention.

Comme dans le mode précédent, le dispositif associe le calculateur 4 au détecteur de cible 5, aux accéléromètres 7, et aux senseurs magnétiques 6 et il est alimenté par les signaux fournis par les quatre capteurs 12 de la position angulaire des gouvernes.

Le calculateur 4 comporte différents modules logiciels.

Le premier module 16 permet comme précédemment de réaliser le calcul des angles de braquage ($\delta$r, $\delta$t, $\delta$l) des gouvernes 2 en roulis ($\delta$r), en tangage ($\delta$t) et en lacet ($\delta$l).

Un deuxième module logiciel 24 calcule, à partir des mesures des composantes du vecteur $\overrightarrow{Los}$, l'angle de roulis de ce vecteur dans le repère lié au projectile.

Cet angle de roulis est habituellement noté $\varphi$. Il s'agit de l'angle qui sépare l'axe $O_mY_m$ de la projection du vecteur $\overrightarrow{Los}$ sur le plan de roulis $O_mY_mZ_m$.

A partir du moment où la vitesse de rotation du vecteur $\overrightarrow{Los}$ dans le repère terrestre est faible par rapport à la vitesse de rotation du projectile lui-même, on montre que la valeur de la dérivée de l'angle de roulis $\varphi$ est sensiblement égale à la composante p du vecteur rotation du projectile $\overrightarrow{\Omega}$ (au signe près).

Le calcul de d$\varphi$/dt à partir des mesures des composantes de $\overrightarrow{Los}$ constitue donc une première évaluation pseudo-gyrométrique qui donne une approximation acceptable de la composante p recherchée.

Pour améliorer sa précision et réduire son bruitage, elle est complétée par un filtrage à l'aide d'un premier estimateur 22 qui sera par exemple un filtre de Kalman, estimateur qui utilisera également la valeur de l'angle de braquage ($\delta$r) des gouvernes en roulis qui est fournie par le module 16 ainsi que des valeurs préprogrammées de coefficients mécaniques et aérodynamiques du projectile considéré, valeur fournie par la mémoire 20.

Le premier estimateur met en oeuvre les équations d'état suivante :

$$\dot{p} = dp/dt = (-1/T)p + (K_r/T)\delta_R$$

$$d\varphi/dt = -p$$

Par ailleurs un troisième module logiciel 18 calcule à partir des signaux fournis par les senseurs magnétiques 6, les angles de site $\Theta_H$ et de gisement $\Psi_H$ du vecteur $\vec{H}$ dans le repère projectile

Conformément à ce mode de réalisation de l'invention, le calculateur 4 comporte également un module logiciel 23 qui est un deuxième estimateur, par exemple un filtre de Kalman étendu, estimateur qui est lui aussi alimenté par la mémoire 20 avec les valeurs des coefficients mécaniques et aérodynamiques du projectile 1 considéré.

L'estimateur 23 est donc relié au module 16 ainsi qu' aux accéléromètres 7 et au module 18.

L'estimateur 23 permet donc d'estimer les composantes (p,q,r) du vecteur rotation du projectile ($\vec{\Omega}$) définies dans le repère lié au projectile. Ce filtre met en oeuvre sept variables d'état:

- les composantes p,q,r du vecteur rotation $\Omega$,
- les angles $\Psi_H$, $\Theta_H$ définissant la direction du champ magnétique terrestre H dans le repère lié au projectile,
- les angles $\alpha$ (incidence du projectile en tangage) et $\beta$ (incidence du projectile en lacet).

L'estimateur permet de prendre en compte les caractéristiques dynamiques du projectile ce qui permet d'améliorer l'estimation des vitesses de rotation p,q et r et d'éliminer une grande partie du bruit de mesure.

Le deuxième estimateur 23 utilise ici également comme donnée d'entrée la valeur de vitesse de roulis p calculée par le premier estimateur 22. Cet estimateur peut fournir une valeur estimée de p à la fréquence d'échantillonnage requise par 23 en utilisant son mode prédicteur.

Le vecteur de mesure (ou vecteur d'observation) utilisé par 23 a donc ici comme composantes : ($\Psi_H$ $\Theta_H$ $\Gamma_Z$ $\Gamma_Y$ p). Ce vecteur utilise la valeur estimée de p fournie par l'estimateur 22.

Ce vecteur qui utilise les mesures magnétométriques et accélérométriques peut être fourni à une fréquence plus élevée que la fréquence d'échantillonnage utilisée par le filtre 22. La fréquence de calcul pourra être ici de quelques centaines de Hz (alors que l'échantillonnage de mesure de l'écartomètre 5 est de l'ordre de quelques dizaines de Hz).

L'équation d'état mise en oeuvre par le deuxième estimateur pourra utiliser les équations de mécanique du vol décrites précédemment. On pourra ainsi écrire (avec les mêmes notations de variables que dans l'exemple précédent) :

$$
\begin{vmatrix}
\dot{\psi}_H \\
\dot{\theta}_H \\
\dot{\alpha} \\
\dot{\beta} \\
\dot{p} \\
\dot{q} \\
\dot{r}
\end{vmatrix}
=
\begin{vmatrix}
-\tan\Theta_H*(p\cos\Psi_H+q\sin\Psi_H)-r \\
+p\sin\Psi_H-q\cos\Psi_H \\
p\times\beta+A_\alpha\times\alpha+q \\
-p\times\alpha+A_\alpha\times\beta+r \\
(-1/T)\times p \\
B_\alpha\times\alpha+C_q\times q+J\times r\times p \\
B_\alpha\times\beta+C_q\times r-J\times p\times q
\end{vmatrix}
+
\begin{vmatrix}
0 & 0 & 0 \\
0 & 0 & 0 \\
0 & B_\delta & 0 \\
0 & 0 & B_\delta \\
(Kr/T) & 0 & 0 \\
0 & D_\delta & 0 \\
0 & 0 & D_\delta
\end{vmatrix}
\times
\begin{vmatrix}
\delta_r \\
\delta_t \\
\delta_l
\end{vmatrix}
$$

Le vecteur d'observation pouvant par ailleurs s'écrire :

$$
\begin{vmatrix}
p \\
\Psi_H \\
\Theta_H \\
\Gamma_Z \\
\Gamma_Y
\end{vmatrix}
=
\begin{vmatrix}
0 & 0 & 0 & 0 & 1 & 0 & 0 \\
1 & 0 & 0 & 0 & 0 & 0 & 0 \\
0 & 1 & 0 & 0 & 0 & 0 & 0 \\
0 & 0 & P_\alpha & 0 & 0 & 0 & 0 \\
0 & 0 & 0 & -P_\alpha & 0 & 0 & 0
\end{vmatrix}
\times
\begin{vmatrix}
\Psi_H \\
\Theta_H \\
\alpha \\
\beta \\
p \\
q \\
r
\end{vmatrix}
$$

Le deuxième estimateur 23 fournira donc les composantes (p,q,r) du vecteur rotation du projectile ($\vec{\Omega}$).

Ces différentes valeurs sont ensuite utilisées d'une façon classique par l'algorithme 21 de pilotage et/ou de guidage qui assure la commande du moyen de pilotage 3 des gouvernes.

## Revendications

1. Procédé de pilotage et/ou de guidage terminal d'un projectile (1) vers une cible, procédé dans lequel on met en oeuvre un détecteur de cible (5) permettant de localiser la cible dans un repère lié au projectile, et d'en déduire à l'aide d'algorithmes de visée les composantes d'un vecteur ligne de visée $\overrightarrow{Los}$ entre cible et projectile dans un repère lié au projectile, procédé dans lequel on détermine également les vitesses de rotation (p,q,r) du projectile autour de ses axes de roulis, de tangage et de lacet, de façon à permettre d'appliquer une loi de pilotage et/ou de guidage du projectile vers sa cible, procédé *caractérisé en ce que* l'on mesure également les trois composantes du champ magnétique terrestre $\vec{H}$ dans le repère lié au projectile, puis on détermine les vitesses de rotation du projectile autour de ses axes de roulis, de tangage et de lacet en combinant au niveau d'un moyen de calcul (4) au moins deux évaluations pseudo-gyrométriques :

   une première évaluation pseudo-gyrométrique d'au moins une des vitesses de rotation du projectile effectuée à partir des mesures des composantes du vecteur $\overrightarrow{Los}$ dans le repère lié au projectile et,
   une deuxième évaluation pseudo-gyrométrique d'au moins une des vitesses de rotation du projectile obtenue à partir des mesures des composantes du vecteur champ magnétique $\vec{H}$ dans le repère lié au projectile.

2. Procédé de pilotage et/ou de guidage terminal selon la revendication 1, **caractérisé en ce qu'**on mesure également au moins deux composantes d'un vecteur accélération du projectile, l'accélération dans le plan de lacet $\Gamma_Y$ et l'accélération dans le plan de tangage $\Gamma_Z$, et on mesure également les angles de braquage ($\delta r,\delta t,\delta l$) des gouvernes de roulis ($\delta r$), tangage ($\delta t$) et lacet ($\delta l$), et **en ce qu'**on applique tout ou partie de ces mesures ainsi que tout ou partie de celles relatives aux composantes du vecteur $\overrightarrow{Los}$ et/ou aux composantes du vecteur champ magnétique $\vec{H}$ à au moins un estimateur (19,22,23) qui est par ailleurs alimenté par des valeurs préprogrammées de coefficients aérodynamiques et mécaniques du projectile considéré.

3. Procédé de pilotage et/ou de guidage terminal selon la revendication 2, **caractérisé en ce que** l'estimateur est un filtre de Kalman étendu.

4. Procédé de pilotage et/ou de guidage terminal selon une des revendications 1 à 3, **caractérisé en ce que** la première évaluation pseudo gyrométrique met en oeuvre une mesure des angles de site $\Theta$ et de gisement $\Psi$ du vecteur $\overrightarrow{Los}$ dans le repère projectile, la deuxième évaluation pseudo gyrométrique mettant en oeuvre une mesure des angles de site $\Theta_H$ et de gisement $\Psi_H$ du vecteur $\vec{H}$ dans le repère projectile la détermination des vitesses de rotation du projectile étant faite par une combinaison des mesures effectuées.

5. Procédé de pilotage et/ou de guidage terminal selon une des revendications 1 à 3, **caractérisé en ce que :**

   la première évaluation pseudo gyrométrique met en oeuvre une mesure de l'angle de roulis $\varphi$ du vecteur $\overrightarrow{Los}$ dans le repère projectile, mesure suivie d'une estimation de la vitesse de roulis du projectile,
   la deuxième évaluation pseudo gyrométrique met en oeuvre une mesure des angles de site $\Theta_H$ et de gisement $\Psi_H$ du vecteur $\vec{H}$ dans le repère projectile l'évaluation des vitesses de rotation en tangage et lacet se faisant en combinant la valeur de vitesse de roulis estimée lors de la première évaluation avec les valeurs mesurées lors de la deuxième évaluation et relatives au vecteur $\vec{H}$.

6. Procédé de pilotage et/ou de guidage terminal selon la revendication 5, **caractérisé en ce que :**

   la valeur de la vitesse de roulis du projectile est évaluée à l'aide d'un premier estimateur (22) qui est alimenté également avec la valeur de l'angle de roulis ($\varphi$) du vecteur $L_{OS}$, avec la valeur de l'angle de braquage en roulis ($\delta r$) et avec des valeurs préprogrammées de coefficients aérodynamiques et mécaniques du projectile considéré.

7. Procédé de pilotage et/ou de guidage terminal selon la revendication 6, **caractérisé en ce que :**

   on évalue les vitesses de rotation en roulis, tangage et lacet en appliquant à un deuxième estimateur (23) les mesures relatives au vecteur $\vec{H}$, les angles de braquage ($\delta r,\delta t,\delta l$) des gouvernes de roulis ($\delta r$), tangage ($\delta t$) et

lacet ($\delta l$), les mesures des composantes du vecteur accélération du projectile dans le plan de lacet $\Gamma_Y$ et dans le plan de tangage $\Gamma_Z$, le deuxième estimateur étant par ailleurs alimenté par des valeurs préprogrammées de coefficients aérodynamiques et mécaniques du projectile considéré.

**8.** Dispositif de pilotage et/ou de guidage terminal d'un projectile (1) vers une cible mettant en oeuvre le procédé selon une des revendications 1 à 7, dispositif *caractérisé en ce qu*'il associe un détecteur de cible (5) ou écartomètre, un calculateur (4) incorporant un algorithme de pilotage et/ou de guidage du projectile, des moyens de pilotage (3) du projectile, au moins deux accéléromètres (7) orientés suivant les axes de mesure d'accélération en tangage (OZm) et d'accélération en lacet (OYm) du projectile et un ou plusieurs senseurs magnétiques (6) disposés de façon à mesurer les trois composantes du vecteur champ magnétique terrestre H dans un repère lié au projectile, le calculateur (4) incorporant ou étant associé à une unité de mesure gyrométrique qui fournit les vitesses de rotation du projectile en roulis, tangage et lacet, unité de mesure qui met en oeuvre un algorithme utilisant au moins deux évaluations pseudo-gyrométriques d'au moins une des vitesses de rotation du projectile, une évaluation étant effectuée à partir des mesures des composantes du vecteur $\overrightarrow{Los}$ dans le repère lié au projectile et une autre évaluation étant effectuée à partir des mesures des composantes du vecteur champ magnétique $\overrightarrow{H}$ dans le repère lié au projectile.

**9.** Dispositif de pilotage et/ou de guidage terminal d'un projectile selon la revendication 8, dispositif **caractérisé en ce que** l'unité de mesure gyrométrique incorpore au moins un estimateur (19,22,23) qui est alimenté par des valeurs préprogrammées de coefficients aérodynamiques et mécaniques du projectile (1) considéré ainsi que par les mesures issues des accéléromètres et les mesures des angles de braquage des gouvernes données par des capteurs angulaires.

**10.** Dispositif de pilotage et/ou de guidage terminal d'un projectile selon la revendication 9, dispositif **caractérisé en ce que** l'écartomètre (5) est de technologie semi-active laser et **en ce que** l'unité de mesure gyrométrique comporte au moins deux étages, un premier étage (25) dans lequel elle estime avec une première fréquence d'échantillonnage la vitesse de roulis du projectile à partir de la mesure des composantes du vecteur $\overrightarrow{Los}$, un deuxième étage (26) dans lequel elle estime, avec une deuxième fréquence d'échantillonnage, et à partir notamment des composantes du vecteur champ magnétique $\overrightarrow{H}$, les vitesses de rotation du projectile en roulis, tangage et lacet.

**Claims**

**1.** A terminal steering and/or guidance process to orient a projectile (1) towards a target, process in which a target detector (5) is implemented enabling the target to be located in a projectile-linked reference marker and from this, using algorithms, the components of a line of sight vector $\overrightarrow{Los}$ to be deduced between the target and projectile in a projectile-linked reference marker, process in which the spin rates (p, q, r) of the projectile around its roll, pitch and yaw axes are also determined so as to enable the application of a steering and/or guidance law for the projectile towards its target, process *wherein* the three components of the terrestrial magnetic field $\overrightarrow{H}$ in the projectile-linked reference marker, then the projectile spin rate is determined around the roll, pitch and yaw axes by combining in computation means (4) at least two pseudo-gyrometric evaluations:

- a first pseudo-gyrometric evaluation of at least one of the projectile spin rates made on the basis of the measurements of the components of the $\overrightarrow{Los}$ vector in the projectile-linked reference marker, and
- a second pseudo-gyrometric evaluation of at least one of the projectile spin rates obtained from the measurements of the terrestrial magnetic field $\overrightarrow{H}$ vector components in the projectile-linked reference marker.

**2.** A terminal steering and/or guidance process according to Claim 1, wherein at least two components of a projectile acceleration vector are measured, the acceleration in the yaw plane $\Gamma_Y$ and the acceleration in the pitch plane $\Gamma_Z$, and the control surface angles ($\delta r, \delta t, \delta l$) of the fins for roll ($\delta r$), pitch ($\delta t$) and yaw ($\delta l$), and wherein all or part of those related to the $\overrightarrow{Los}$ vector components and/or the magnetic field $\overrightarrow{H}$ vector components to at least one estimator (19,22,23) that is further supplied with pre-programmed values of aerodynamic and mechanical coefficients of the projectile in question.

**3.** A terminal steering and/or guidance process according to Claim 2, wherein the estimator is an extended Kalman filter.

**4.** A terminal steering and/or guidance process according to one of Claims 1 to 3, wherein the first pseudo-gyrometric evaluation implements a measurement of the elevation $\Theta$ and azimuth $\psi$ angles of the $\overrightarrow{Los}$ vector in the projectile-linked reference marker, the second pseudo-gyrometric evaluation implementing a measurement of the elevation $\Theta_H$ and azimuth $\Psi_H$ angles of the $\overrightarrow{H}$ vector in the projectile-linked reference marker, the determination of the projectile spin rates being made by a combination of the measurements made.

5. A terminal steering and/or guidance process according to one of Claims 1 to 3, wherein :

the first pseudo-gyrometric evaluation implements a measurement of the roll angle $\varphi$ of the $\overrightarrow{Los}$ vector in the projectile-linked reference marker, measurement followed by an estimation of the projectile roll rate,
the second pseudo-gyrometric evaluation in this case will implement a measurement of the elevation $\Theta_H$ and azimuth $\Psi_H$ angles of the $\overrightarrow{H}$ vector in the projectile-linked reference marker, the evaluation of the pitch and yaw spin rates being made by combining the roll rate value estimated during the first evaluation with the values measured during the second evaluation and related to the $\overrightarrow{H}$ vector.

6. A terminal steering and/or guidance process according to Claim 5, wherein:

the projectile roll rate value is evaluated using a first estimator (22) that is supplied with the value of the roll angle ($\varphi$) of the $L_{os}$ vector, with the value of the control surface in roll angle ($\delta r$), and with pre-programmed aerodynamic and mechanical coefficient values for the projectile in question.

7. A terminal steering and/or guidance process according to Claim 6, wherein:

the roll, pitch and yaw spin rates are evaluated by applying the measurements, to a second estimator (23), related to the $\overrightarrow{H}$ vector, the control surface angles ($\delta r,\delta t,\delta l$) of the fins in roll ($\delta r$), pitch ($\delta t$) and yaw ($\delta l$), the measurements of the projectile acceleration vector components in the yaw plane $\Gamma_Y$ and in the pitch plane $\Gamma_Z$, the second estimator being further supplied with pre-programmed aerodynamic and mechanical coefficient values for the projectile in question.

8. A terminal steering and/or guidance device for a projectile (1) towards its target, such device implementing the process according to one of Claims 1 to 7, *wherein* it associates a target detector (5) or deviation indicator, a computer (4) incorporating a steering and/or guidance algorithm for the projectile, means (3) to steer the projectile, at least two accelerometers (7) oriented along a pitch acceleration measurement axis (OZm) and a yaw acceleration measurement axis (OYm) of the projectile and one or several magnetic sensors (6) arranged so as to measure the three components of the terrestrial magnetic field H in a projectile-linked reference marker, the computer (4) incorporating or being associated with a gyrometric measurement unit that supplies the roll, pitch and yaw spin rates for the projectile, measurement unit implementing an algorithm using at least two pseudo-gyrometric evaluations of at least one of the projectile's spin rates, an evaluation being made from the measurements of the $\overrightarrow{Los}$ vector components in the projectile-linked reference marker and another evaluation being made from the measurements of the magnetic field $\overrightarrow{H}$ vector components in the projectile-linked reference marker.

9. A terminal steering and/or guidance device for a projectile according to Claim 8, device wherein the geometric measurement unit incorporates at least one estimator (19, 22, 23) that is supplied with pre-programmed values of aerodynamic and mechanical coefficients of the projectile (1) in question as well as with measurements from the accelerometers and the measurements of the control surface angles of the fins given by the angular sensors.

10. A terminal steering and/or guidance device for a projectile according to Claim 9, device wherein the deviation indicator (5) is of semi-active laser technology and wherein the gyrometric measurement unit incorporates at least two stages, a first stage (25) in which, using a first sampling frequency, it estimates the projectile's roll rate from the measurement of the $\overrightarrow{Los}$ vector components, a second stage (26) in which, using a second sampling frequency, it estimates the roll, pitch and yaw spin rates of the projectile, namely using the components of the magnetic field $\overrightarrow{H}$ vector.

**Patentansprüche**

1. Verfahren zum terminalen Steuern und/oder Führen eines Projektils (1) in ein Ziel, wobei bei dem Verfahren ein Zieldetektor (5) verwendet wird, der es ermöglicht, das Ziel in einem an das Projektil gebundenen Koordinatensystem zu lokalisieren und daraus mit Hilfe von Peil-Algorithmen die Komponenten eines Peil-Linienvektors $\overrightarrow{Los}$ zwischen Ziel und Projektil in einem an das Projektil gebundenen Koordinatensystem zu schließen, wobei bei dem Verfahren ebenfalls die Drehgeschwindigkeiten (p, q, r) des Projektils um seine Roll-, Nick- und Gierachse derart bestimmt werden, dass es ermöglicht wird, eine Vorschrift zur Steuerung und/oder Führung des Projektils ins Ziel anzuwenden, wobei das Verfahren *dadurch gekennzeichnet ist*, **dass** ebenfalls die drei Komponenten des Erdmagnetfeldes $\vec{H}$ in dem an das Projektil gebundenen Koordinatensystem gemessen werden, dann die Drehgeschwindigkeiten des Projektils um seine Roll-, Nick- und Gierachse bestimmt werden, indem im Bereich eines Berechnungsmittels (4) wenigstens zwei pseudo-girometrische Bewertungen kombiniert werden:

eine erste pseudo-girometrische Bewertung von wenigstens einer der Drehgeschwindigkeiten des Projektils, die ausgehend von den Messungen der Komponenten des Vektors $\overrightarrow{Los}$ in dem an das Projektil gebundenen Koordinatensystem erfolgt, und
eine zweite pseudo-girometrische Bewertung von wenigstens einer der Drehgeschwindigkeiten des Projektils, die ausgehend von den Messungen der Komponenten des Magnetfeldvektors $\vec{H}$ in dem an das Projektil gebundenen Koordinatensystem erzielt wird.

2. Verfahren zum terminalen Steuern und/oder Führen nach Anspruch 1, **dadurch gekennzeichnet, dass** ebenfalls wenigstens zwei Komponenten eines Beschleunigungsvektors des Projektils, die Beschleunigung in der Gierebene $\Gamma_y$ und die Beschleunigung in der Nickebene $\Gamma_z$, gemessen werden, und ebenfalls die Lenkausschlagswinkel ($\delta r$, $\delta t$, $\delta l$) der Roll-($\delta r$), Nick- ($\delta t$) und Gier- ($\delta l$) Steuerflächen gemessen werden und dass alle oder ein Teil dieser Messungen sowie alle oder ein Teil derjenigen bezüglich der Komponenten des Vektors $\overrightarrow{Los}$ und/oder der Komponenten des Magnetfeldvektors $\vec{H}$ in wenigstens einem Schätzglied (19, 22, 23) angewendet werden, dem außerdem vorprogrammierte Werte von aerodynamischen und mechanischen Koeffizienten des betrachteten Projektils zugeführt werden.

3. Verfahren zum terminalen Steuern und/oder Führen nach Anspruch 2, **dadurch gekennzeichnet, dass** das Schätzglied ein vielseitiger Kalman-Filter ist.

4. Verfahren zum terminalen Steuern und/oder Führen nach einem der Ansprüche 1 bis 3, **dadurch gekennzeichnet, dass** die erste pseudo-girometrische Bewertung eine Messung des Elevationswinkels $\Theta$ und des horizontalen Winkels $\Psi$ des Vektors $\overrightarrow{Los}$ im Projektil-Koordinatensystem verwendet, wobei die zweite pseudo-girometrische Bewertung eine Messung des Elevationswinkels $\Theta_H$ und des horizontalen Winkels $\Psi_H$ des Vektors $\vec{H}$ im Projektil-Koordinatensystem verwendet, wobei die Bestimmung der Drehgeschwindigkeiten des Projektils durch eine Kombination der vorgenommenen Messungen gemacht wird.

5. Verfahren zum terminalen Steuern und/oder Führen nach einem der Ansprüche 1 bis 3, **dadurch gekennzeichnet, dass:**

die erste pseudo-girometrische Bewertung eine Messung des Rollwinkels $\varphi$ des Vektors $\overrightarrow{Los}$ in dem Projektil-Koordinatensystem verwendet, wobei die Messung einer Abschätzung der Rollgeschwindigkeit des Projektils folgt,
die zweite pseudo-girometrische Bewertung eine Messung des Elevationswinkels $\Theta_H$ und des horizontalen Winkels $\Psi_H$ des Vektors $\vec{H}$ im Projektil-Koordinatensystem verwendet, wobei die Bewertung der Nick- und Gier-Rotationsgeschwindigkeiten sich vollzieht, indem der Wert der bei der ersten Bewertung geschätzten Rollgeschwindigkeit mit den bei der zweiten Bewertung gemessenen Werten bezüglich des Vektors $\vec{H}$ kombiniert wird.

6. Verfahren zum terminalen Steuern und/oder Führen nach Anspruch 5, **dadurch gekennzeichnet, dass:**

der Wert der Rollgeschwindigkeit des Projektils mit Hilfe eines ersten Schätzgliedes (22) bewertet wird, dem ebenfalls der Wert des Rollwinkels ($\varphi$) des Vektors $\overrightarrow{Los}$ mit dem Wert des Roll-Lenkausschlagswinkels ($\delta r$) und mit vorprogrammierten Werten von aerodynamischen und mechanischen Koeffizienten des betrachteten Projektils zugeführt wird.

7. Verfahren zum terminalen Steuern und/oder Führen nach Anspruch 6, **dadurch gekennzeichnet, dass:**

die Roll-, Nick- und Gier-Rotationsgeschwindigkeiten bewertet werden, indem in einem zweiten Schätzglied (23) die Messungen bezüglich des Vektors $\vec{H}$, der Lenkausschlagswinkel ($\delta r$, $\delta t$, $\delta l$) der Roll-($\delta r$), Nick- ($\delta t$) und Gier- ($\delta l$) Steuerflächen, die Messungen der Komponenten des Beschleunigungsvektors des Projektils in der Gierebene $\Gamma_Y$ und in der Nickebene $\Gamma_Z$ angewendet werden, wobei dem zweiten Schätzglied außerdem die vorprogrammierten Werte von aerodynamischen und mechanischen Koeffizienten des betrachteten Projektils zugeführt werden.

8. Vorrichtung zum terminalen Steuern und/oder Führen eines Projektils (1) in ein Ziel unter Verwendung des Verfahrens nach einem der Ansprüche 1 bis 7, wobei die Vorrichtung **dadurch gekennzeichnet ist, dass** sie einen Zielsensor (5) oder Abstandsmesser, einen Rechner (4), der einen Algorithmus zum Steuern und/oder Führen des Projektils enthält, Mittel zum Steuern (3) des Projektils, wenigstens zwei Beschleunigungsmesser (7), die gemäß der Achsen zur Messung von Nickbeschleunigung (OZm) und Gierbeschleunigung (OYm) des Projektils orientiert sind, und ein oder mehrere Magnetsensoren (6), die derartig angeordnet sind, das die drei Komponenten des Erdmagnetfeldvektors H in einem an das Projektil gebundenen Koordinatensystem gemessen werden, verknüpft, wobei der Rechner (4) eine girometrische Messeinheit einschließt oder mit ihr verknüpft ist, welche die Roll-, Nick- und Gier-Rotationsgeschwindigkeiten liefert, wobei die Messeinheit einen Algorithmus verwendet, der wenigstens zwei pseudo-girometrische Bewertungen von wenigstens einer der Rotationsgeschwindigkeiten des Projektils verwendet, wobei eine Bewertung ausgehend von den Messungen der Komponenten des Vektors $\overrightarrow{Los}$ in dem an das Projektil gebundenen Koordinatensystem erfolgt und eine weitere Bewertung ausgehend von den Messungen der Komponenten des Magnetfeldvektors $\overrightarrow{H}$ in dem an das Projektil gebundenen Koordinatensystem erfolgt.

9. Vorrichtung zum terminalen Steuern und/oder Führen eines Projektils nach Anspruch 8, wobei die Vorrichtung **dadurch gekennzeichnet ist, dass** die girometrische Messeinheit wenigstens ein Schätzglied (19, 22, 23) enthält, dem vorprogrammierte Werte von aerodynamischen und mechanischen Koeffizienten des betrachteten Projektils (1) sowie die von den Beschleunigungsmessern ausgehenden Messungen und die Messungen der Lenkausschlagswinkel der Steuerflächen, die von Winkelsensoren geliefert werden, zugeführt werden.

10. Vorrichtung zum terminalen Steuern und/oder Führen eines Projektils nach Anspruch 9, wobei die Vorrichtung **dadurch gekennzeichnet ist, dass** der Abstandsmesser (5) semi-aktive Lasertechnologie enthält und dass die girometrische Messeinheit wenigstens zwei Stufen umfasst, eine erste Stufe (25), auf der sie mit einer ersten Stichprobenfrequenz die Rollgeschwindigkeit des Projektils ausgehend von der Messung der Komponenten des Vektors $\overrightarrow{Los}$ abschätzt, eine zweite Stufe (26), auf der sie mit einer zweiten Stichprobenfrequenz und ausgehend insbesondere von den Komponenten des Magnetfeldvektors $\overrightarrow{H}$ die Roll-, Nick- und Gier-Geschwindigkeiten des Projektils abschätzt.

Fig. 1a

$$\delta r \approx (\delta 1 + \delta 2 + \delta 3 + \delta 4)/4$$
$$\delta t \approx (\delta 1 - \delta 3)/2$$
$$\delta l \approx (\delta 2 - \delta 4)/2$$

Fig. 1b

Fig. 2

EP 1 840 692 B1

Fig. 3

19

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2872928
- FR 2846079
- FR 2846080